# FASCICULE DE BREVET EUROPEEN

(11) **EP 1 404 094 B1**
(45) Date de publication et mention de la délivrance du brevet: **17.08.2011**
(21) Numéro de dépôt: 03292368.2
(22) Date de dépôt: 26.09.2003
(51) Int. Cl.: H04M 3/493, G10L 15/00, H04M 1/247

(54) **Système de téléchargement de contenu multimédia et procédé associé**
System und Verfahren zum Herunterladen von Multimediainhalten
System and method for downloading multimedia content

(30) Priorité: 26.09.2002 FR 0211946
(43) Date de publication de la demande: 31.03.2004
(73) Titulaire: Bouygues Telecom, 75008 Paris (FR)
(72) Inventeur: Fournier, Jean-Philippe, CA 94086 Sunnyvale (US); Passet, Georges, 78720 Cernay la Ville (FR)
(74) Mandataire: Callon de Lamarck, Jean-Robert

(56) Documents cités:
- EP-A- 0 676 882
- WO-A-01/69928

## Description

L'invention concerne le domaine de la navigation sur Internet ou tout autre réseau (GSM, GPRS, UMTS) quel que soit le protocole utilisé (WAP, I-Mode, etc.) grâce à un terminal mobile ou un ordinateur.

On connaît des systèmes permettant d'accéder à des sites Internet dans lesquels l'utilisateur se connecte à un serveur qui lui permet d'établir un contact avec d'autres serveurs et d'obtenir des informations.

Le document WO 01/69928 décrit un système de téléchargement comprenant deux modes de réalisation distincts. Dans un premier mode de réalisation, un contenu est téléchargé via un réseau vers un téléviseur. Dans un deuxième mode de réalisation, un contenu est téléchargé via un réseau de téléphonie mobile sur un terminal mobile. Les requêtes vocales sont transmises en langage naturel de l'utilisateur sous la forme de données voix et une liste de proposition est renvoyée sur l'écran de télévision.

Le document US 6101473 décrit un système de navigation comprenant un serveur Web, un terminal informatique de type PC incluant un navigateur Web et un dispositif de reconnaissance vocale couplant le serveur avec un réseau de téléphonie standard (de type filaire). Le dispositif de reconnaissance vocale est apte à interpréter une commande vocale de navigation émise par l'utilisateur depuis son poste téléphonique relié au réseau de téléphonie standard et à commander le serveur Web en fonction de cette interprétation. Le serveur Web est apte à renvoyer des données graphiques vers le terminal informatique, en fonction de la commande vocales émise par l'utilisateur. Ce système de navigation permet à un utilisateur de naviguer sur Internet en formulant des ordres de navigation ou de téléchargement en langage naturel à partir de son téléphone fixe.

Grâce à de tels systèmes, l'utilisateur peut télécharger du contenu multimédia vers son terminal informatique en formulant verbalement sa requête depuis son poste téléphonique fixe.

Un inconvénient de ces systèmes est qu'ils sont basés sur l'utilisation en parallèle d'un terminal informatique et d'un téléphone fixe et qu'ils comprennent des moyens de fonctionnement relativement complexes.

Un autre inconvénient de ces systèmes est que le dispositif de reconnaissance vocale ne réalise pas toujours une interprétation correcte des requêtes de l'utilisateur. En particulier, lorsque l'utilisateur se trouve dans un environnement bruyant, sa voix peut être perturbée et le contenu de sa requête peut s'en trouver altéré.

Il en résulte que le contenu multimédia qu'il reçoit ne correspond pas à ce qu'il a requis.

Cet inconvénient est particulièrement gênant dans le cas où l'utilisateur commande le téléchargement d'un film, d'une séquence vidéo ou sonore (émission de radio ou de télévision), d'une animation, d'un programme, etc.

En effet, le téléchargement des fichiers peut s'avérer relativement long donc coûteux pour l'utilisateur.

Par ailleurs, le téléchargement de contenu peut faire partie d'un service payant.

C'est pourquoi, il est souhaitable que les requêtes de l'utilisateur soient correctement interprétées pour éviter tout téléchargement inutile.

A cet effet, l'invention propose un système de téléchargement de contenu multimédia vers un terminal mobile selon la revendication 1.

Ce système permet avantageusement à l'utilisateur de vérifier que sa requête a correctement été interprétée avant de confirmer le téléchargement d'un fichier. Ce système évite donc tout téléchargement inutile.

Ce système s'applique à des terminaux tels que téléphones mobiles équipés de navigateurs Internet, ordinateurs reliés à ou intégrant un terminal de connexion au réseau mobile, agendas électroniques, assistants personnels, etc. aptes à échanger des informations via le réseau de téléphonie mobiles et à recevoir des fichiers de données.

Ces terminaux permettent de naviguer sur Internet, de télécharger des données, d'utiliser des moyens spécifiques de sélection comprenant par exemple un écran tactile et un stylet.

En utilisant de tels terminaux, l'utilisateur confirme sa requête de manière simple et rapide avant que ne s'effectue le téléchargement du contenu multimédia correspondant.

Dans une mise en oeuvre de l'invention, le dispositif de reconnaissance vocale est apte à générer et transmettre au terminal une liste contenant plusieurs propositions d'interprétation les plus probables.

Les propositions peuvent être transmises au terminal sous forme de liens hypertexte en relation avec des fichiers multimédia contenus dans la base de données, l'utilisateur pouvant activer le lien correspondant à sa requête.

De manière avantageuse, les propositions étant associées à des probabilités de correspondance avec la requête de l'utilisateur, elles peuvent être classées selon leur ordre de probabilité.

Cette disposition permet de diminuer encore le temps nécessaire à l'utilisateur pour choisir le contenu qu'il souhaite télécharger.

De manière avantageuse, le système peut comprendre des moyens pour enregistrer la requête vocale.

De manière avantageuse, le terminal est un terminal mobile présentant un canal données.

Dans une mise en oeuvre de l'invention, le système comprend des moyens pour activer ou désactiver le mode de fonctionnement avec renvoi de proposition(s) d'interprétation au terminal et :
- dans le cas où ce mode de fonctionnement est activé, le dispositif de reconnaissance vocale est apte à renvoyer au terminal une ou plusieurs proposition(s) d'interprétation,
- dans le cas où ce mode de fonctionnement est désactivé, le dispositif de reconnaissance vocale est apte à transmettre directement une interprétation à un serveur d'accès à la base de données.

De manière avantageuse, le terminal comprend des moyens pour mesurer un paramètre relatif à la qualité du réseau et en fonction de ce paramètre, activer ou désactiver le mode de fonctionnement avec renvoi de proposition(s).

Alternativement, les moyens pour activer ou désactiver le mode de fonctionnement avec renvoi de proposition(s) au terminal peuvent être actionnés par un utilisateur du terminal.

L'invention concerne également un procédé de téléchargement de contenu multimédia vers un terminal conforme à la revendication 9

Le signal de requête vocale est un signal données

Dans une mise en oeuvre de l'invention, les propositions sont renvoyées de la base de données au terminal sous forme d'un message textuel.

Dans une autre mise en oeuvre de l'invention, les propositions sont renvoyées de la base de données au terminal sous forme d'un message vocal transmis en tant que fichier son ou par streaming audio.

De manière avantageuse, les propositions sont présentées par le terminal dans un ordre décroissant de probabilité de correspondance avec la requête.

Dans une mise en oeuvre de l'invention, on sélectionne une proposition en positionnant un curseur sur cette proposition puis en appuyant sur une touche de validation d'un clavier associé au terminal.

Dans le cas où le téléphone est muni d'un écran tactile (permettant la saisie d'informations par simple pression ou déplacement du doigt à l'écran), on sélectionne une proposition en positionnant un stylet sur l'écran tactile au niveau de la proposition considérée.

Dans une autre mise en oeuvre de l'invention, on sélectionne une proposition en faisant défiler les propositions jusqu'à celle l'on souhaite sélectionner puis en appuyant sur une touche de validation d'un clavier associé au terminal.

Dans une autre mise en oeuvre de l'invention encore, on sélectionne une proposition en appuyant sur une touche d'un clavier associé au terminal identifiant la proposition.

Dans une autre mise en oeuvre encore, on sélectionne une proposition en énonçant verbalement une référence identifiant cette proposition.

Lorsque aucune des propositions n'est sélectionnée, on renouvelle l'opération de traitement de la requête par le dispositif de reconnaissance vocale en éliminant les propositions non sélectionnées d'une liste d'expressions que peut comprendre le dispositif de reconnaissance vocale.

Ayant enregistré au préalable la requête vocale, cette nouvelle opération de traitement peut être réalisée à partir de la requête initiale enregistrée.

Alternativement, cette nouvelle opération de traitement peut être réalisée sur une nouvelle requête.

Lorsque aucune des propositions n'est sélectionnée, la nouvelle requête peut être formulée en mode textuel ou graphique.

Dans une mise en oeuvre de l'invention, on active au préalable un mode de fonctionnement avec renvoi de proposition(s) au terminal.

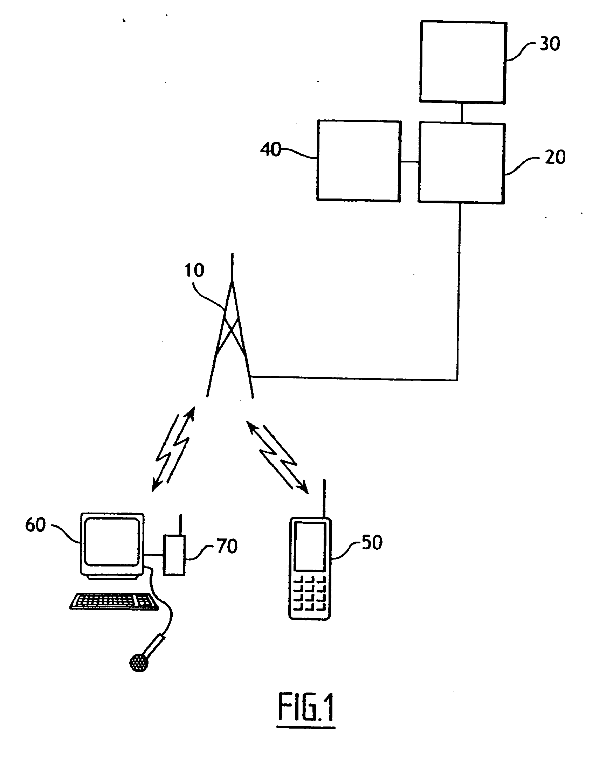

D'autres caractéristiques et avantages ressortiront encore de la description qui suit, laquelle est purement illustrative et non limitative et doit être lue en regard de la figure 1 annexée qui est une représentation schématique d'un système de téléchargement conforme à un mode de réalisation de l'invention.

Sur la figure 1, le système de téléchargement utilise un réseau de téléphonie mobile 10. Ce système comprend un serveur d'accès 20 connecté au réseau de téléphonie mobile 10. Ce serveur d'accès 20 est également connecté à une base de données 30 contenant un ensemble de fichiers multimédia et à un dispositif de reconnaissance et de synthèse vocale 40.

Des utilisateurs peuvent utiliser le système de téléchargement au moyen d'un terminal apte à échanger des informations via le réseau de téléphonie mobile 10 et à recevoir des fichiers de données. Il peut s'agit par exemple d'un téléphone mobile 50 équipé d'un navigateur Internet WEB ou WAP, ou encore d'un ordinateur 60 relié à ou intégrant un terminal 70 de connexion au réseau mobile 10. Le terminal est en particulier apte à recevoir et interpréter des pages HTML. Il est apte à afficher des liens hypertextes et hypermédias activables par l'utilisateur.

Le terminal peut également se présenter sous la forme d'un agenda électronique ou assistant personnel. Ces appareils comprennent généralement un écran tactile et un stylet permettant à l'utilisateur d'écrire sur l'écran ou de sélectionner des commandes.

L'utilisateur d'un téléphone mobile 50 à la recherche d'un contenu multimédia peut se connecter au serveur 20 en navigant sur Internet (en utilisant le WAP, l'I-Mode ou tout autre protocole) ou en commandant l'accès direct à ce serveur 20. Le téléphone mobile 50 comprend un canal données et éventuellement un canal voix.

Une page HTML s'affiche sur l'écran du téléphone mobile 50 indiquant à l'utilisateur qu'il peut rechercher un contenu en formulant une requête verbale. Ce contenu peut être constitué d'un fichier contenant un film, une séquence vidéo ou sonore (émission de radio ou de télévision, musique), une animation, un programme, etc.

Par exemple, si l'utilisateur souhaite télécharger un film, il prononce le titre de ce film. Sa requête est transmise au serveur d'accès 20 sous la forme d'un message voix ou sous la forme de paquets de données. Dans ce dernier cas, le téléphone mobile 50 convertit le signal voix de l'utilisateur en données. Le serveur d'accès 20 enregistre la requête et la transmet au dispositif de reconnaissance vocale 40. Le dispositif de reconnaissance vocale 40 reçoit et interprète la requête de l'utilisateur.

Selon un premier mode de fonctionnement « sans aide », le dispositif de reconnaissance vocale 40 renvoie au serveur d'accès 20 l'interprétation la plus probable de la requête de l'utilisateur. Le serveur d'accès 20 commande alors le téléchargement du fichier correspondant au choix de l'utilisateur de la base de données 30 vers le téléphone mobile 50

Selon un deuxième mode de fonctionnement « avec aide », le dispositif de reconnaissance vocale 40 renvoie au serveur d'accès 20 un ensemble de propositions d'interprétation de la requête de l'utilisateur. Ces propositions correspondent à des titres de films disponibles dans la base de données 30. Chacune de ces propositions est associée à une probabilité de correspondance avec la requête de l'utilisateur.

Selon une première variante de ce système, le serveur d'accès 20 transmet au téléphone mobile 50 l'ensemble des propositions via le canal données sous la forme d'un message textuel qui s'affiche sur l'écran du téléphone 50. Ces propositions sont associées à des probabilités de correspondance avec la requête de l'utilisateur et s'affichent sur l'écran dans l'ordre décroissant de probabilités.

L'utilisateur du terminal vérifie que sa requête se trouve bien parmi les propositions qui s'affichent sur son écran.

L'utilisateur peut sélectionner l'une des propositions en déplaçant un curseur sur la proposition qui l'intéresse ou en la désignant avec un stylet ou en faisant défiler les proposition puis en validant son choix en appuyant sur une touche de validation de son clavier.

Alternativement, les propositions peuvent être référencées par des numéros.

Dans ce cas, l'utilisateur peut sélectionner l'une des propositions en composant le numéro de la proposition qui l'intéresse et en validant son choix en appuyant sur une touche de validation de son clavier.

il peut également énoncer verbalement le numéro de la proposition qui l'intéresse.

Le téléphone mobile 50 renvoie au serveur d'accès 20 la proposition sélectionnée. Le serveur d'accès 20 commande le téléchargement du fichier correspondant au choix de l'utilisateur de la base de données 30 vers le téléphone mobile 50.

De avantageuse, les propositions peuvent être envoyées par le serveur d'accès 20 au téléphone mobile 50 sous forme de liens hypertexte en relation avec des fichiers de contenus multimédia de la base de données 30. L'utilisateur peut activer le lien qui l'intéresse. Le téléphone mobile 50 est alors directement en relation avec la base de données pour le téléchargement du fichier sélectionné.

Ce fichier peut être téléchargé sous forme compressée. Dans ce cas, ce fichier pourra être lu par un logiciel de décompression (un lecteur de contenu). Un tel logiciel peut par exemple être inclus dans le téléphone mobile 50.

Le serveur d'accès 20 enregistre des données concernant l'opération de téléchargement et l'identité du téléphone mobile 50 dans un registre. Ce registre servira à facturer le service de téléchargement à l'utilisateur. Par exemple, ce service pourra être reporté directement sur sa facture de téléphone ou décompté de son abonnement.

Dans le cas où aucune des propositions ne correspond à sa requête, l'utilisateur a la possibilité de sélectionner la proposition « aucune de ces propositions ». Le téléphone mobile 50 renvoie au serveur d'accès 20 une information indiquant que l'utilisateur n'est pas satisfait des propositions qui lui sont faites. Le serveur d'accès 20 envoie à nouveau au dispositif de reconnaissance vocale la requête de l'utilisateur qu'il a enregistrée. Le dispositif de reconnaissance vocale procède à une nouvelle reconnaissance sur la base de cet enregistrement en éliminant les propositions d'interprétation que l'utilisateur n'a pas sélectionnées.

Cette élimination consiste à éliminer d'une liste d'expressions que peut comprendre le dispositif de reconnaissance vocale, les propositions non sélectionnées par l'utilisateur.

Selon une deuxième variante de ce système, le serveur d'accès transmet au téléphone mobile 50 l'ensemble des propositions sous la forme d'un message vocal. Ce message peut être transporté sur le canal voix ou le canal données. Dans les deux cas, il peut être téléchargé vers le téléphone mobile sous forme d'un fichier son ou encore transmis par « streaming audio » (envoi et lecture en temps réel de données audio compressées). De même que précédemment, ces propositions sont énoncées de la plus probable à la moins probable. L'utilisateur sélectionne l'une des propositions en appuyant sur une touche du terminal correspondant à la proposition qu'il souhaite sélectionner.

Alternativement, les différentes propositions peuvent être énoncées successivement et l'utilisateur accède à la proposition suivante ou valide la proposition qui vient d'être énoncée en appuyant sur certaines touches de son clavier.

Alternativement encore, l'utilisateur sélectionne une proposition en énonçant verbalement une référence identifiant cette proposition. Les propositions peuvent par exemple être associées à des lettres ou à des numéros. L'utilisateur énonce alors le numéro ou la lettre de la proposition qui l'intéresse.

Selon une troisième variante de ce système, le serveur d'accès 20 transmet l'ensemble des propositions via le canal données sous forme de données ainsi qu'un message vocal associé. Les propositions sont affichées sur l'écran du téléphone mobile 50 tandis que le terminal mobile 50 lit le message vocal. Le message vocal peut consister en la liste des propositions affichées ou tout autre indication à l'attention de l'utilisateur. Il peut s'agir d'un message du type : « Veuillez sélectionner l'une des propositions affichées en cliquant sur celle qui correspond à votre requête. » Le message vocal peut être généré au sein du réseau (par exemple le dispositif de reconnaissance vocal 40 comprend un module de synthèse vocale) ou par le téléphone 50 lui-même.

Dans les trois variantes précédemment exposées, le système de téléchargement permet à l'utilisateur de formuler verbalement ses requêtes et d'obtenir simultanément un retour graphique. La transmission et l'affichage de propositions peuvent être réalisés alors qu'aucune communication téléphonique n'est établie entre le terminal 50 et le réseau 10. Il en résulte que le canal voix n'est pas ouvert en permanence.

Lorsque après plusieurs tentatives, la reconnaissance vocale n'a pas abouti, le serveur d'accès 20 propose à l'utilisateur de saisir sa requête en utilisant le clavier du terminal 50 ou d'épeler le ou les mot(s) correspondant à sa requête. Dans le cas où l'utilisateur épelle le ou les mot(s) correspondant à sa requête, le dispositif de reconnaissance vocale 40 passe en mode de reconnaissance alphanumérique.

Le mode de fonctionnement du dispositif « avec aide » n'est pas nécessairement activé en permanence. Notamment, dans le cas où la liaison entre le terminal 50 et le réseau 10 est de bonne qualité, les requêtes de l'utilisateurs sont généralement transmises et correctement interprétées par le dispositif de reconnaissance vocale 40. Le téléphone mobile 50 peut comprendre des moyens pour mesurer un paramètre relatif à la qualité de la liaison terminal/réseau et en fonction du résultat de cette mesure activer ou désactiver le mode de fonctionnement « avec aide » du système de téléchargement.

Cette activation ou désactivation du mode de fonctionnement « avec aide » peut également être réalisée par l'utilisateur lui-même.

Bien entendu, le système précédemment décrit peut être mis en oeuvre avec un ordinateur 60 au lieu du téléphone mobile 50. Dans ce cas, l'ordinateur 60 doit être relié à ou doit intégrer un terminal 70 de connexion au réseau mobile 10 ainsi qu'à des moyens de prise de son.

Ce système peut également être mis en oeuvre avec un agenda électronique ou un assistant personnel pouvant être connecté à un réseau de téléphonie mobile.

Certains agendas ou ordinateurs comprennent un écran tactile de reconnaissance d'écriture. Si la requête de l'utilisateur est mal interprétée par le dispositif de reconnaissance vocale, l'utilisateur peut écrire sa requête sur l'écran tactile.

On comprendra que le système de téléchargement de contenu précédemment décrit peut être mis en oeuvre avec tout équipement permettant d'accéder à un réseau de téléphonie mobile.

## Revendications

1. Système de téléchargement de contenu multimédia vers un terminal mobile (50 ; 60, 70) via un réseau de téléphonie mobile (10), ledit système comprenant un dispositif de reconnaissance vocale (40), et une base de données (30) connectée au réseau (10) et contenant des fichiers multimédia, le dispositif de reconnaissance vocale (40) étant apte à recevoir une requête vocale émanant d'un utilisateur et transmise par le terminal (50 ; 60, 70), le dispositif de reconnaissance vocale (40) étant apte à interpréter la requête qu'il reçoit et à renvoyer au terminal (50 ; 60, 70) une ou plusieurs proposition(s) d'interprétation désignant un ou des fichier(s) contenu(s) dans la base de données (30), de sorte que le terminal peut renvoyer une proposition sélectionnée par l'utilisateur, ce qui entraîne le téléchargement d'un fichier multimédia correspondant à la proposition sélectionnée de la base de donnée (30) vers le terminal (50 ; 60, 70) via le réseau de téléphonie mobile (10), la requête vocale et la ou les proposition(s) d'interprétation étant transmise(s) sous forme de paquets de données via un canal données.

2. Système selon la revendication 1, dans lequel le dispositif de reconnaissance vocale (40) est apte à générer et transmettre au terminal (50 ; 60, 70) une liste contenant plusieurs propositions d'interprétation les plus probables.

3. Système selon la revendication 2, dans lequel les propositions étant associées à des probabilités de correspondance avec la requête de l'utilisateur, les propositions de la liste de propositions sont classées selon leur ordre de probabilité.

4. Système selon l'une des revendications 1 à 3, dans lequel les propositions sont transmises au terminal (50 ; 60, 70) sous forme de liens hypertexte en relation avec des fichiers multimédia contenus dans la base de données (30), l'utilisateur pouvant activer le lien correspondant à sa requête.

5. Système selon l'une des revendications qui précèdent, comprenant des moyens pour enregistrer la requête vocale.

6. Système selon l'une des revendications précédentes, comprenant des moyens pour activer ou désactiver le mode de fonctionnement avec renvoi de proposition(s) d'interprétation au terminal (50 ; 60, 70) et :
- dans le cas où ce mode de fonctionnement est activé, le dispositif de reconnaissance vocale (40) est apte à renvoyer au terminal (50 ; 60, 70) une ou plusieurs proposition(s) d'interprétation,
- dans le cas où ce mode de fonctionnement est désactivé, le dispositif de reconnaissance vocale est apte à transmettre directement une interprétation à un serveur d'accès (50) à la base de données.

7. Système selon la revendication 6, dans lequel le terminal (50 ; 60, 70) comprend des moyens pour mesurer un paramètre relatif à la qualité du réseau et en fonction de ce paramètre, activer ou désactiver le mode de fonctionnement avec renvoi de proposition(s).

8. Système selon la revendication 6, dans lequel les moyens pour activer ou désactiver le mode de fonctionnement avec renvoi de proposition(s) au terminal (50 ; 60, 70) peuvent être actionnés par un utilisateur du terminal (50 ; 60, 70).

9. Procédé de téléchargement de contenu multimédia vers un terminal mobile (50; 60, 70) via un réseau de téléphonie mobile (10), comprenant les étapes selon lesquelles :
- un utilisateur transmet depuis un terminal (50 ; 60, 70) via le réseau de téléphonie mobile (10) une requête vocale à un dispositif de reconnaissance vocale (40),
- le dispositif de reconnaissance vocale (40) traite la requête et renvoie au terminal (50 ; 60, 70) une ou plusieurs proposition(s) d'interprétation désignant un ou des fichier(s) multimédia contenu(s) dans une base de données (30) connectée au réseau (10),
- l'utilisateur sélectionne la proposition correspondant à la requête vocale, ce qui entraîne le téléchargement d'un fichier multimédia correspondant à la proposition sélectionnée de la base de donnée (30) vers le terminal (50 ; 60, 70) via le réseau de téléphonie mobile (10) la requête vocale et la ou les proposition(s) d'interprétation étant transmise(s) sous forme de paquets de données via un canal données.

10. Procédé selon la revendication 9, dans lequel les propositions sont renvoyées de la base de données (30) au terminal (50 ; 60, 70) sous forme d'un message textuel.

11. Procédé selon la revendication 9, dans lequel les propositions sont renvoyées de la base de données (30) au terminal (50 ; 60, 70) sous forme d'un message vocal transmis en tant que fichier son ou par streaming audio.

12. Procédé selon l'une des revendications 9 à 11, dans lequel les propositions sont présentées par le terminal (50 ; 60, 70) selon un ordre décroissant de probabilité de correspondance avec la requête.

13. Procédé selon la revendication 10, dans lequel l'utilisateur sélectionne une proposition en positionnant un curseur sur cette proposition puis en appuyant sur une touche de validation d'un clavier associé au terminal (50 ; 60, 70).

14. Procédé selon l'une des revendications 9 à 12, dans lequel l'utilisateur sélectionne une proposition en faisant défiler les propositions jusqu'à celle que l'on souhaite sélectionner puis en appuyant sur une touche de validation d'un clavier associé au terminal (50 ; 60, 70).

15. Procédé selon l'une des revendications 9 à 11, dans lequel l'utilisateur sélectionne une proposition en appuyant sur une touche d'un clavier associé au terminal (50 ; 60, 70) identifiant cette proposition.

16. Procédé selon l'une des revendications 9 à 12, dans lequel l'utilisateur sélectionne une proposition en énonçant verbalement une référence identifiant cette proposition.

17. Procédé selon l'une des revendications 9 à 12, dans lequel l'utilisateur sélectionne une proposition en positionnant un stylet sur un écran tactile associé au terminal, au niveau de la proposition considérée.

18. Procédé selon l'une des revendications 9 à 17, dans lequel lorsque aucune des propositions n'est sélectionnée, on renouvelle l'opération de traitement de la requête par le dispositif de reconnaissance vocale (40) en éliminant les propositions non sélectionnées d'une liste d'expressions que peut comprendre le dispositif de reconnaissance vocale (40).

19. Procédé selon la revendication 18, dans lequel, ayant enregistré au préalable la requête vocale, cette nouvelle opération de traitement est réalisée à partir de la requête initiale enregistrée.

20. Procédé selon la revendication 18, dans lequel cette nouvelle opération de traitement est réalisée sur une nouvelle requête.

21. Procédé selon la revendication 20, dans lequel, lorsqu'aucune des propositions n'est sélectionnée, la nouvelle requête est formulée en mode textuel ou graphique.

22. Procédé selon l'une des revendications 9 à 21, dans lequel on active au préalable un mode de fonctionnement avec renvoi de proposition(s) au terminal (50 ; 60, 70).

## Claims

1. System for downloading multimedia content to a mobile terminal (50; 60, 70) via a mobile telephony network (10), said system comprising a voice recognition device (40), and a database (30) connected to the network (10) and containing multimedia files, the voice recognition device (40) being able to receive a voice request emanating from a user and transmitted by the terminal (50; 60, 70), the voice recognition device (40) being able to interpret the request that it receives and to return to the terminal (50; 60, 70) one or more interpretation prompt(s) designating one or more file(s) contained in the database (30), so that the terminal can return a prompt selected by the user, thereby bringing about the downloading of a multimedia file corresponding to the prompt selected from the database (30) to the terminal (50; 60, 70) via the mobile telephony network (10), the voice request and the interpretation proposal(s) being transmitted in the form of data packets via a data channel.

2. System according to Claim 1, wherein the voice recognition device (40) is able to generate and transmit to the terminal (50; 60, 70) a list containing several most probable interpretation prompts.

3. System according to Claim 2, wherein the prompts being associated with probabilities of correspondence with the user's request, the prompts of the list of prompts are ranked according to their order of probability.

4. System according to one of Claims 1 to 3, wherein the prompts are transmitted to the terminal (50; 60, 70) in the form of hypertext links tied with multimedia files contained in the database (30), the user being able to activate the link corresponding to his request.

5. System according to one of the preceding claims, comprising means for recording the voice request.

6. System according to one of the preceding claims, comprising means for activating or deactivating the mode of operation with return of interpretation prompt(s) to the terminal (50; 60, 70) and:
- in the case where this mode of operation is activated, the voice recognition device (40) is able to return one or more interpretation prompt(s) to the terminal (50; 60, 70),
- in the case where this mode of operation is deactivated, the voice recognition device is able to transmit an interpretation directly to a server (50) for access to the database.

7. System according to Claim 6, wherein the terminal (50; 60, 70) comprises means for measuring a parameter relating to the quality of the network and as a function of this parameter, activating or deactivating the mode of operation with return of prompt(s).

8. System according to Claim 6, wherein the means for activating or deactivating the mode of operation with return of prompt(s) to the terminal (50; 60, 70) can be actuated by a user of the terminal (50; 60, 70).

9. Process for downloading multimedia content to a mobile terminal (50; 60, 70) via a mobile telephony network (10), comprising the steps according to which:
- a user transmits a voice request to a voice recognition device (40) from a terminal (50; 60, 70) via the mobile telephony network (10),
- the voice recognition device (40) processes the request and returns to the terminal (50; 60, 70) one or more interpretation prompt(s) designating one or more multimedia file(s) contained in a database (30) connected to the network (10),
- the user selects the prompt corresponding to the voice request, thereby bringing about the downloading of a multimedia file corresponding to the prompt selected from the database (30) to the terminal (50; 60, 70) via the mobile telephony network (10), the voice request and the interpretation proposal(s) being transmitted in the form of data packets via a data channel.

10. Process according to Claim 9, wherein the prompts are returned from the database (30) to the terminal (50; 60, 70) in the form of a text message.

11. Process according to Claim 9, wherein the prompts are returned from the database (30) to the terminal (50; 60, 70) in the form of a voice message transmitted as a sound file or by audio streaming.

12. Process according to one of Claims 9 to 11, wherein the prompts are presented by the terminal (50; 60, 70) in a descending order of probability of correspondence with the request.

13. Process according to Claim 10, wherein the user selects a prompt by positioning a cursor over this prompt then by pressing an enable key of a keypad associated with the terminal (50; 60, 70).

14. Process according to one of Claims 9 to 12, wherein the user selects a prompt by scrolling prompts down to the one whose selection is desired and then by pressing an enable key of a keypad associated with the terminal (50; 60, 70).

15. Process according to one of Claims 9 to 11, wherein the user selects a prompt by pressing a key of a keypad associated with the terminal (50; 60, 70) identifying this prompt.

16. Process according to one of Claims 9 to 12, wherein the user selects a prompt by verbally pronouncing a reference identifying this prompt.

17. Process according to one of Claims 9 to 12, wherein the user selects a prompt by positioning a stylus on a touch screen associated with the terminal, at the level of the relevant prompt.

18. Process according to one of Claims 9 to 17, wherein when none of the prompts is selected, the operation of processing the request by the voice recognition device (40) is repeated while eliminating the unselected prompts from a list of expressions that the voice recognition device (40) may comprise.

19. Process according to Claim 18, wherein having recorded the voice request beforehand, this new processing operation is carried out on the basis of the initial recorded request.

20. Process according to Claim 18, wherein this new processing operation is carried out on a new request.

21. Process according to Claim 20, wherein when none of the prompts is selected, the new request is formulated in text or graphics mode.

22. Process according to one of Claims 9 to 21, wherein a mode of operation with return of prompt(s) to the terminal (50; 60, 70) is activated beforehand.

## Patentansprüche

1. System zum Herunterladen von Multimediainhalten auf ein mobiles Endgerät (50; 60, 70) über ein Mobilfunknetz (10), wobei das System eine Spracherkennungsvorrichtung (40) und eine Datenbank (30) enthält, die mit dem Netz (10) verbunden ist und Multimediadateien enthält, wobei die Spracherkennungsvorrichtung (40) eingerichtet ist, eine von einem Benutzer ausgehende und über das Endgerät (50; 60, 70) gesendete Spracheingabe zu empfangen, wobei die Spracherkennungsvorrichtung (49) eingerichtet ist, die Eingabe, die sie empfängt, zu interpretieren und an das Endgerät (50; 60, 70) einen oder mehrere Interpretationsvorschläge, welche eine oder mehrere in der Datenbank (30) enthaltene Dateien bezeichnen, zu senden, so dass das Endgerät einen vom Benutzer ausgewählten Vorschlag zurücksenden kann, was das Herunterladen einer dem ausgewählten Vorschlag entsprechenden Multimediadatei der Datenbank (30) auf das Endgerät (50; 60, 70) über das Mobilfunknetz (10) zur Folge hat, wobei die Spracheingabe und der oder die Interpretationsvorschläge in Form von Datenpaketen über einen gegebenen Kanal gesendet werden.

2. System nach Anspruch 1, wobei die Spracherkennungsvorrichtung (40) für ein Generieren und Senden einer Liste, welche mehrere Interpretationsvorschläge, die am wahrscheinlichsten sind, enthält, an das Endgerät (50; 60, 70) eingerichtet ist.

3. System nach Anspruch 2, wobei die Vorschläge Wahrscheinlichkeiten für eine Entsprechung zur Eingabe des Benutzers zugeordnet sind, wobei die Vorschläge aus der Vorschlagsliste in der Reihenfolge ihrer Wahrscheinlichkeit geordnet sind.

4. System nach einem der Ansprüche 1 bis 3, wobei die Vorschläge auf das Endgerät (50; 60, 70) in Form von Hyperlinks in Relation zu in der Datenbank (30) enthaltenen Multimediadateien gesendet werden, wobei der Benutzer den seiner Eingabe entsprechenden Link aktivieren kann.

5. System nach einem der vorstehenden Ansprüche mit Mittel zur Speicherung der Spracheingabe.

6. System nach einem der vorstehenden Ansprüche mit Mittel zur Aktivierung oder Deaktivierung der Betriebsart mit Rücksendung eines Interpretationsvorschlags/von Interpretationsvorschlägen an das Endgerät (50; 60, 70) und:
- im Falle, dass die Betriebsart aktiviert ist, die Spracherkennungsvorrichtung (40) eingerichtet ist, an das Endgerät 50; 60, 70) einen Interpretationsvorschlag/mehrere Interpretationsvorschläge zurückzusenden,
- im Falle, dass die Betriebsart deaktiviert ist, die Spracherkennungsvorrichtung eingerichtet ist, eine Interpretation direkt an einen Server (50) für den Zugriff auf die Datenbank zu senden.

7. System nach Anspruch 6, wobei das Endgerät (50; 60, 70) Mittel zur Messung eines Parameters in Bezug auf die Netzqualität und, in Abhängigkeit von diesem Parameter, zur Aktivierung oder Deaktivierung der Betriebsart mit Rücksendung eines Vorschlags/von Vorschlägen aufweist.

8. System nach Anspruch 6, wobei die Mittel zur Aktivierung oder Deaktivierung der Betriebsart mit Rücksendung eines Vorschlags/von Vorschlägen an das Endgerät (50; 60, 70) von einem Benutzer des Endgeräts (50; 60, 70) betätigt werden können.

9. Verfahren zum Herunterladen von Multimediainhalten auf ein mobiles Endgerät (50; 60, 70) über ein Mobilfunknetz (10), wobei das Verfahren Verfahrensschritte aufweist, nach welchen
- ein Benutzer von einem Endgerät (50; 60, 70) über das Mobilfunknetz (10) eine Spracheingabe an einer Spracherkennungsvorrichtung (40) sendet,
- die Spracherkennungsvorrichtung (40) die Eingabe bearbeitet und an das Endgerät (50; 60, 70) einen Interpretationsvorschlag oder mehrere Interpretationsvorschläge zurück sendet, welcher/welche einen oder mehrere in der mit dem Netz (10) verbundenen Datenbank (30) enthaltene Multimediadateien bezeichnet/bezeichnen,
- der Benutzer den der Spracheingabe entsprechenden Vorschlag auswählt, was das Herunterladen einer dem ausgewählten Vorschlag entsprechenden Multimediadatei der Datenbank (30) auf das Endgerät (50; 60, 70) über das Mobilfunknetz (10) zur Folge hat, wobei die Spracheingabe und der oder die Interpretationsvorschläge in Form von Datenpaketen über einen gegebenen Kanal übertragen werden.

10. Verfahren nach Anspruch 9, wobei die Vorschläge aus der Datenbank (30) an das Endgerät (50; 60, 70) in Form einer textlichen Nachricht zurückgesandt werden.

11. Verfahren nach Anspruch 9, wobei die Vorschläge von der Datenbank (30) auf das Endgerät (50; 60, 70) in Form einer Sprachnachricht als Tondatei oder mit Streaming Audio übertragen werden.

12. Verfahren nach einem der Ansprüche 9 bis 11, wobei die Vorschläge durch das Endgerät (50; 60, 70) in der Reihenfolge abnehmender Wahrscheinlichkeit einer Entsprechung zu der Eingabe dargeboten werden.

13. Verfahren nach Anspruch 10, wobei der Benutzer einen Vorschlag auswählt, indem er einen Cursor an dem Vorschlag anordnet und dann eine Bestätigungstaste einer dem Endgerät (50; 60, 70) zugeordneten Tastatur drückt.

14. Verfahren nach einem der Ansprüche 9 bis 12, wobei der Benutzer einen Vorschlag auswählt, indem er die Vorschläge bis zu demjenigen, den er auswählen will, scrollt und dann eine Bestätigungstaste einer dem Endgerät (50; 60, 70) zugeordneten Tastatur drückt.

15. Verfahren nach einem der Ansprüche 9 bis 11, wobei der Benutzer einen Vorschlag auswählt, indem er eine den Vorschlag identifizierende Taste einer dem Endgerät (50; 60, 70) zugeordneten Tastatur drückt.

16. Verfahren nach einem der Ansprüche 9 bis 12, wobei der Benutzer einen Vorschlag auswählt, indem er verbal eine diesen Vorschlag identifizierende Referenz ausspricht.

17. Verfahren nach einem der Ansprüche 9 bis 12, wobei der Benutzer einen Vorschlag auswählt, indem er einen Stift auf einem dem Endgerät zugeordneten Berührungsbildschirm an der Stelle des betrachteten Vorschlags anordnet.

18. Verfahren nach einem der Ansprüche 9 bis 17, wobei, wenn keiner der Vorschläge ausgewählt wird, der Vorgang der Bearbeitung der Eingabe durch die Spracherkennungsvorrichtung (40) unter Eliminierung der nicht ausgewählten Vorschläge aus einer Liste von Ausdrücken, welche die Spracherkennungsvorrichtung (40) verstehen kann, erneuert wird.

19. Verfahren nach Anspruch 18, wobei nach vorheriger Speicherung der Spracheingabe dieser neue Bearbeitungsvorgang anhand der gespeicherten Anfangseingabe durchgeführt wird.

20. Verfahren nach Anspruch 18, wobei dieser neue Bearbeitungsvorgang auf einer neuen Eingabe durchgeführt wird.

21. Verfahren nach Anspruch 20, wobei, wenn keiner der Vorschläge ausgewählt wird, die neue Eingabe im Textmodus oder Grafikmodus formuliert wird.

22. Verfahren nach einem der Ansprüche 9 bis 21, wobei vorab eine Betriebsart mit Rücksendung eines Vorschlags/von Vorschlägen an das Endgerät (50; 60, 70) aktiviert wird.
